# FASCICULE DE BREVET EUROPEEN

(11) **EP 1 342 366 B1**
(45) Date de publication et mention de la délivrance du brevet: **20.04.2011**
(21) Numéro de dépôt: 01983660.0
(22) Date de dépôt: 30.10.2001
(51) Int. Cl.: H04N 5/14, H04N 5/44

(54) **PROCEDE DE TRAITEMENT DE DONNEES VIDEO DESTINEES A ETRE VISUALISEES SUR UN ECRAN ET DISPOSITIF METTANT EN OEUVRE LE PROCEDE**
VERFAHREN ZUR VERARBEITUNG VON AUF EINEM BILDSCHIRM DARGESTELLTEN VIDEODATEN UND VORRICHTUNG DAFÜR
METHOD FOR PROCESSING VIDEO DATA DESIGNED FOR DISPLAY ON A SCREEN AND DEVICE THEREFOR

(30) Priorité: 31.10.2000 FR 0014009
(43) Date de publication de la demande: 10.09.2003
(73) Titulaire: Thomson Licensing, 92130 Issy-les-Moulineaux (FR)
(72) Inventeur: CHEVALLIER, Louis, F-35520 LA MEZIERE (FR); EVEN, Gilles, F-22000 Saint-Brieuc (FR); LE CLERC, François, F-35000 Rennes (FR)
(74) Mandataire: Kohrs, Martin
(86) Numéro de dépôt international: PCT/FR2001/003377
(87) Numéro de publication internationale: WO 2002/037836

(56) Documents cités:
- EP-A- 1 026 887
- DE-A- 19 737 889
- US-A- 5 949 476

## Description

L'invention concerne un procédé de traitement de données vidéo destinées à être visualisées sur écran ainsi qu'un dispositif mettant en oeuvre le procédé. L'invention s'applique plus particulièrement à la détection de données vidéo extraites d'une émission de télévision possédant une certaine caractéristique, et à leur visualisation sur un écran de télévision,

Le contexte de la présente invention est celui des serveurs audiovisuels domestiques, et de façon générale de tous appareils susceptibles de visualiser des émissions audiovisuelles reçues d'un réseau de diffusion. De nos jours, un utilisateur d'un tel équipement peut obtenir de grande quantité d'informations audiovisuelles. Il a donc peu de temps à consacre à chaque émission et préfère souvent les survoler en visualisant un résumé. Des émissions telles que des matchs de foot-ball comportent des moments plus intéressants que d'autres, les buts par exemple ou les meilleures actions. Un utilisateur disposant de peu de temps peut désirer ne voir qu'un résumé composé des séquences les plus intéressantes. Les diffuseurs de programmes de télévision peuvent émettre des résumés audiovisuels correspondant à certaines émissions qu'ils diffusent. Ces résumés sont par exemple, les bandes annonce des films diffusés. Mais cela impose au diffuseur de constituer les dits résumés. De plus la diffusion de tels résumés occupe une bande passante non négligeable sur le réseau de diffusion.

Un des buts de la présente invention est de pouvoir fournir à l'utilisateur des résumés d'émissions audiovisuelles. La présente solution ne nécessite pas de traitement supplémentaire de la part du diffuseur et ne réclame pas de bande passante supplémentaire.

La demande de brevet EP 1 026 887 décrit un système d'enregistrement sur cassette vidéo ou disque dur d'une partie d'une émission sélectionnée par un utilisateur. Dans le but de ne présenter à l'utilisateur qu'une durée minimale de l'émission, le système détecte les séquences de ralenti et n'enregistre que ces séquences dans la mémoire. Les séquences de ralenti sont ensuite visualisées les unes à la suite des autres.

La demande de brevet DE 19737 889 décrit un système destiné à améliorer les dispositifs d'enregistrement automatique sur les magnétoscopes à bande. Afin de limiter la place occupée sur la bande magnétique, le système n'enregistre que des segments de signaux correspondant à des séquences audiovisuelles intéressantes. Ces segments peuvent notamment être détectés par un détecteur de ralentis, les séquences de ralentis étant considérées plus intéressantes que les séquences à vitesse normale. La détection des segments s'effectue en analysant la quantité de mouvement entre les images vidéo.

A cet effet, l'invention concerne un procédé de visualisation de parties d'émissions audiovisuelles dans un récepteur audiovisuel, les dites émissions étant diffusées sur un réseau de diffusion, le récepteur comportant un moyen de visualisation des dites émissions, comportant :
- une étape d'enregistrement des émissions dans une mémoire,- une étape de lecture des émissions de la mémoire,
   et caractérisé en ce qu'il comporte en outre
- une étape de recherche d'au moins une séquence de ralenti au sein des émissions,
- une étape de calcul du facteur du ralenti par rapport à la vitesse normale de la séquence détectée,
- une étape de visualisation en accélérant ladite séquence de ralenti selon le facteur de ralenti pour la visualiser à la vitesse normale.

De cette façon, le récepteur lit dans sa mémoire l'émission que l'utilisateur désire visualiser, détecte les séquences de ralenti et les envoie successivement vers un écran de visualisation. L'utilisateur voit dans l'ordre uniquement les séquences qui semblent particulièrement intéressantes puisque le diffuseur les propose en ralenti. Pour diminuer encore plus le temps de visualisation du résumé, les séquences de ralenti sont accélérés selon le facteur de ralenti calculé afin de les visualiser à vitesse normale. Le diffuseur n'a alors pas besoin de constituer de résumés audiovisuels et de les émettre puisque c'est le récepteur qui s'en charge, ce qui de ce fait économise de la bande passante. Si l'utilisateur a ensuite le temps, il peut voir l'émission qui est enregistrée dans sa totalité dans la mémoire du récepteur.

Selon un mode de fonctionnement particulier, des commandes utilisateurs permettent de contrôler la visualisation de la succession de séquences de ralenti, telles que : visualisation des séquences en continue ou au coup par coup, saut à la séquence suivante, saut à la séquence précédente.

Selon un mode de fonctionnement particulier, l'étape de détection des séquences de ralenti au sein d'émissions composée de trames comporte :
- a) une étape de détection de mouvement opérant sur deux trames consécutives extraites des émissions audiovisuelles, la dite étape générant une suite de valeurs de mouvement ou d'absence de mouvement d'indicateurs binaires indiquant respectivement la présence ou l'absence de mouvement entre les deux trames considérées,
- b) des étapes de détermination d'un motif de répétition de trame composé d'une valeur de mouvement et d'une suite consécutive d'au moins une valeur d'absence de mouvement, le dit motif de répétition ayant une longueur,
- c) au moins une étape de constitution d'un motif de référence à partir d'un premier motif de répétition de trame,
- d) des étapes de détection de motifs composés d'une suite de valeurs de mouvement et d'absence de mouvement d'une longueur égale à celle du motif de référence,
- e) des étapes de comparaison entre le motif de référence et des motifs précédemment déterminés à l'étape d),
- f) une étape de comptabilisation dans un compteur dit de confiance du nombre d'identités entre le motif de référence et les motifs déterminés lors des étapes d),
- g) une étape de validation de la présence d'une séquence de ralenti lorsque la valeur du compteur de confiance est supérieure à une valeur déterminée (Thaut).

Selon un mode de fonctionnement particulier, le procédé comporte une étape de validation d'un signal d'accrochage lorsque la valeur du compteur de confiance est supérieure à une valeur déterminée

Selon un mode de fonctionnement particulier, l'étape de comptabilisation effectue une diminution de la valeur du compteur de confiance lorsque l'étape d) détecte une inégalité. Selon un autre mode de fonctionnement, la valeur du compteur de confiance est plafonnée.

L'invention a aussi pour objet un récepteur d'émissions audiovisuelles comprenant un moyen de réception d'émissions émises sur un réseau de diffusion, un moyen de mémorisation d'une partie au moins d'émissions audiovisuelles reçues, un moyen de lecture de la mémoire et un moyen de visualisation des émissions lues, un détecteur de séquence de ralenti au sein d'une émission audiovisuelle enregistrée, caractérisé en ce qu'il comporte un moyen de calcul d'un facteur de ralenti de la séquence par rapport à la vitesse normale, un moyen d'accélération selon le facteur de ralenti de la séquence de ralenti enregistrée, et d'un module de visualisation contrôlant les moyens de lecture de la mémoire, le moyen d'accélération et les moyens de visualisation pour afficher à vitesse normale les séquences de ralenti détectées par le détecteur de ralenti analysant l'émission lue par le moyen de lecture.

Le récepteur peut enregistrer des émissions audiovisuelles à partir d'un réseau. Puis, l'utilisateur émet une commande à son récepteur pour qu'il lise l'émission enregistrée et détecte les séquences au ralenti, chaque séquence détectée est visualisée sur un écran. De cette manière, l'utilisateur peut voir rapidement les moments les plus intéressants de l'émission. Le récepteur visualise à vitesse normale les séquences de ralenti, ce qui permet d'accélérer la visualisation du résumé.

Selon un autre mode de fonctionnement particulier, le module de visualisation comporte des commandes utilisateur et des moyens permettant
- de lire la séquence de ralenti enregistrée après la séquence en cours et de la visualiser sans attendre la fin de la séquence en cours,
- de lire la séquence de ralenti enregistrée immédiatement avant la séquence en cours et de la visualiser sans attendre la fin de la séquence en cours.

Selon un mode de fonctionnement particulier, le récepteur comporte une mémoire de stockage d'au moins une partie d'émission audiovisuelle, un détecteur de mouvement détectant un mouvement (M) ou une absence de mouvement (S) entre deux images de même parité de la dite émission audiovisuelle lues de ladite mémoire, caractérisé en ce qu'il comporte en outre un moyen de détermination d'un motif de répétition de trames composé d'une valeur (M) suivie d'une séquence de valeurs (S) comportant au moins une valeur (S), une mémoire de stockage d'un motif dit de référence obtenu par le moyen de détermination d'un motif de répétition de trame, un comparateur comparant le motif de référence avec les motifs enregistrés en sortie du détecteur de mouvement opérant sur les trames issues de l'émission audiovisuelle traitée, un compteur dit de confiance comptabilisant le nombre d'identités déterminé par le comparateur, un moyen d'émission d'un signal de présence d'un ralenti lorsque la valeur du compteur de confiance atteint une valeur déterminée (Thaut).

Selon un mode de fonctionnement particulier, le récepteur calcule le facteur de ralenti, celui-ci étant égal au nombre de valeurs de mouvement et d'absence de mouvement du motif de référence.

Selon un mode de fonctionnement particulier, le récepteur génère un signal d'accrochage lorsque la valeur du compteur de confiance atteint une valeur déterminée. Ce signal d'accrochage déclenche la mémorisation de l'émission audiovisuelle dans l'appareil.

Selon un mode de fonctionnement particulier, le récepteur divise la valeur du compteur de confiance lorsque le comparateur détecte une différence entre le motif de référence et le motif de répétition de trame détecté par le moyen de détermination.

Selon un mode de fonctionnement particulier, le détecteur de mouvement incorporé dans le récepteur détecte un mouvement entre deux trames de même parité séparées par au moins une trame de même parité que les deux premières.

D'autres caractéristiques et avantages de la présente invention ressortiront de la description des exemples de réalisation qui vont suivre, pris à titre d'exemples non limitatifs, en référence aux figures annexées dans lesquelles :
- la figure 1 représente un récepteur de télévision pour la mise en oeuvre de l'invention;
- la figure 2 représente un organigramme des différentes étapes du procédé selon l'invention;
- la figure 3 montre une apparence d'écran pour le contrôle du module de visualisation rapide.
- la figure 4 montre une apparence d'écran lors de la visualisation d'une séquence de ralenti.
- la figure 5 montre un exemple de motif de mouvement des trames composant une séquence de ralenti,
- la figure 6 montre le principe de fonctionnement général d'un dispositif de détection des séquences de ralenti,
- la figure 7 est un schéma d'un automate d'états finis permettant de détecter un motif de mouvement correspondant à une période de ralenti,
- la figure 8 un schéma d'un automate d'états finis permettant d'effectuer le traitement appliqué pour valider la détection de séquence de ralenti, lorsqu'un motif de mouvement correspondant à une période de ralenti a déjà été détecté,
- la figure 9 représente un schéma général du dispositif de détection de séquences de ralenti.

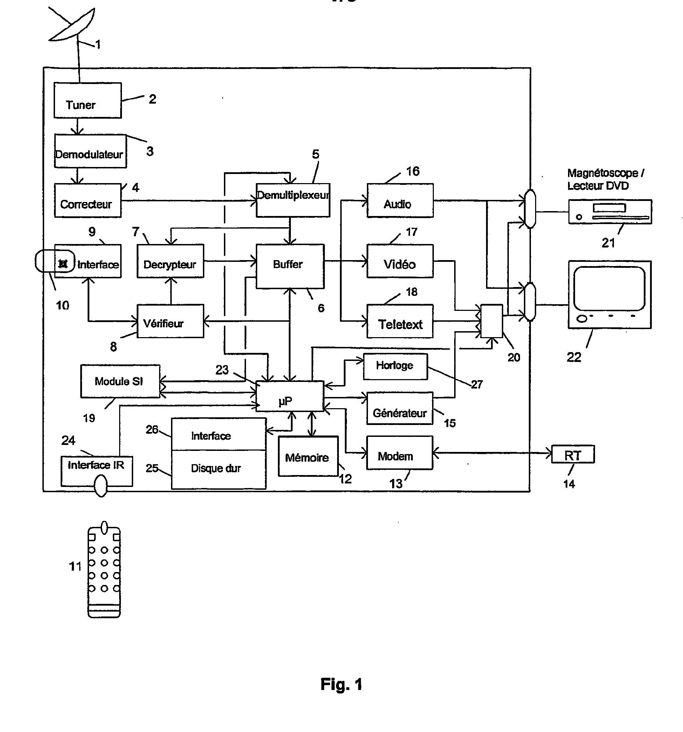

Un récepteur audiovisuel selon le présent exemple de réalisation est décrit à la figure 1. Le récepteur est, par exemple, un décodeur de télévision conforme aux spécifications DVB. Il utilise une couche transport ISO/IEC 13818-1.

Le récepteur est relié à une antenne 1, elle-même reliée à un syntoniseur 2 (appelé également « tuner ») et éventuellement à un lecteur de support d'émissions audiovisuelles 21, typiquement un magnétoscope. Le signal fourni par le tuner est démodulé par un démodulateur 3. Les données démodulées sont désentrelacées et corrigées par un circuit correcteur d'erreur 4 et transmises à un démultiplexeur 5. Celui-ci comporte un certain nombre de filtres programmés par un microprocesseur 23 en fonction des diverses applications supportées par le récepteur. Le microprocesseur 23 est connecté à une mémoire 12 comportant le système d'exploitation ainsi que les programmes résidents ou téléchargés de mise en oeuvre d'applications telles qu'un EPG. La mémoire est illustrée sous la forme d'un bloc unique, mais peut physiquement comporter plusieurs blocs de nature différente : mémoire vive RAM, mémoire morte ROM, mémoire reprogrammable EEPROM ou FLASH. La mémoire morte ROM contient entre autres le programme de base du récepteur. Ce programme comprend des routines de gestion d'entrée-sortie telles que : programmation du démultiplexeur, réception des ordres émis par la télécommande, visualisation de séquences vidéo enregistrée en mémoire et spécifiées par un pointeur, etc.

Un générateur de caractères 15 permet la génération de menus de commande ou de graphiques relatifs aux paramètres du récepteur ou à une application particulière. Le signal vidéo généré est multiplexé avec l'un des signaux vidéo en provenance du récepteur vidéo 17 vers une prise Péritel (prise SCART en anglais) reliée à un téléviseur 22. Le circuit de multiplexage 20 est géré par le microprocesseur 23. Le récepteur est aussi équipé d'une télécommande 11, reliée au microprocesseur par une liaison infrarouge 24. Cette télécommande dispose entre autre des touches de navigation (←,→,↑,↓) et des touches : «◄», «► », « OK », « FIN ». Pour la clarté du schéma, seules les connexions les plus importantes du microprocesseur 23 sont illustrées.

Les sections ou paquets audio ou vidéo filtrés par le démultiplexeur sont stockés dans des zones prédéfinies d'une mémoire tampon 6. Le récepteur, comporte également un disque dur 25 relié au microprocesseur à l'aide d'une interface 26 permettant des transferts rapides d'informations. Le disque dur est avantageusement intégré au récepteur, il peut être proposé sous la forme d'un équipement à part. Le support du disque peut éventuellement être amovible. Le programme exécutable par le microprocesseur 23 analyse les données stockées dans la mémoire tampon 6 par le démultiplexeur 5 et détermine si elles correspondent à la sélection de l'utilisateur. Si oui, elles sont alors enregistrées dans le disque dur 25. La capacité du disque permet d'enregistrer au moins plusieurs heures d'émissions audiovisuelles dans un format compressé (MPEG 2 par exemple).

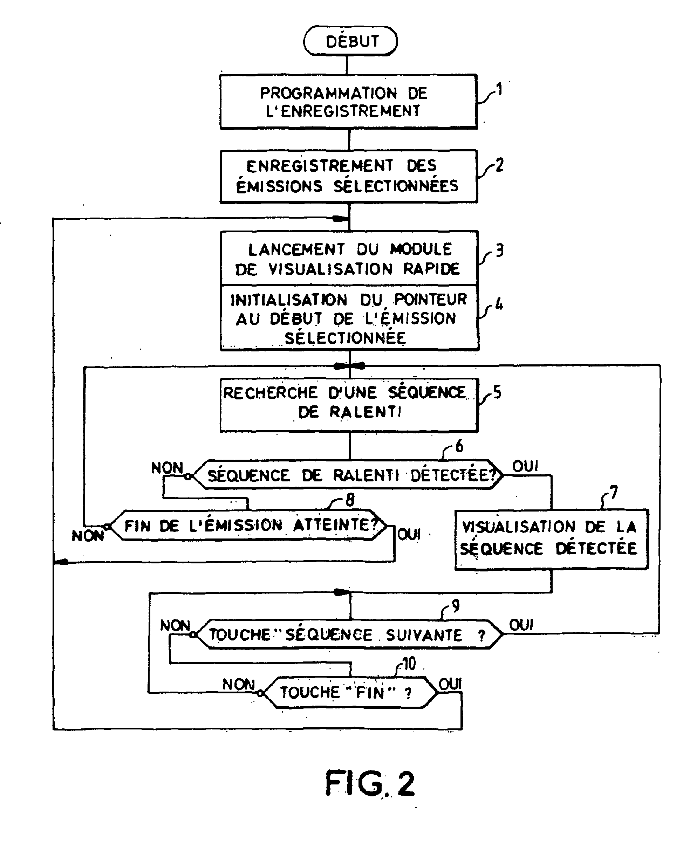

La figure 2 représente un organigramme des opérations pour la mise en oeuvre de la présente invention. Dans un premier temps (étape 1), l'utilisateur programme son appareil de réception afin d'enregistrer une ou plusieurs émissions. La programmation peut s'effectuer soit en définissant une plage horaire et un service déterminé, soit en spécifiant explicitement l'événement (à l'aide d'un Guide Electronique de Programme par exemple, EPG en abrégé). A l'étape 2, les émissions sont effectivement enregistrées dans le disque dur.

Dans un second temps (étape 3), l'utilisateur désire visualiser rapidement le contenu de la mémoire de son disque dur. Il lance alors un Module de Visualisation Rapide, MVR en abrégé. Selon un mode préféré de réalisation, ce module est physiquement, parlant un programme géré par le microprocesseur, bien que conceptuellement, il s'agisse d'une application traitant des paquets de données, au même titre qu'un récepteur audio ou vidéo, pour lesquels des circuits dédiés sont utilisées. De façon simple, le module présente à l'aide d'un menu affiché à l'écran des informations concernant l'ensemble des émissions enregistrées dans le disque dur. Ce menu est dit « initial ». Ces informations sont par exemple le titre, la durée, le service dont l'émission a été extraite ... ou toute autre information susceptible d'aider l'utilisateur dans son choix. L'utilisateur navigue dans ce menu en mettant en évidence visuellement les émissions. En appuyant sur la touche « OK » de la télécommande 11, il lance la visualisation rapide de l'événement mis en évidence. Le déclenchement de la visualisation rapide peut également s'effectuer à l'aide d'une icône affichée sur l'écran. Un appui sur la touche « FIN » de la télécommande 11 (ou une icône correspondante) permet de sortir du module MVR.

Voici maintenant comment fonctionne la visualisation rapide d'un événement. Les données audiovisuelles lues du disque dur sont extraites à partir d'un pointeur. Lorsque l'utilisateur sélectionne une émission, à l'étape 4, le module MVR initialise ce pointeur à l'adresse de début de l'émission sélectionné. Puis (étape 5), le module cherche à partir de la position définie par le pointeur et jusqu'à la fin de l'émission enregistrée, les séquences de ralenti. Nous verrons par la suite la façon de détecter de telles séquences. A l'étape 6, une séquence de ralenti est détectée ce qui provoque l'exécution de l'étape 7 au cours de laquelle la séquence est visualisée. Si la fin de l'émission est atteinte sans qu'une séquence ait été détectée (test de l'étape 8), le module affiche le menu initial (étape 3), l'utilisateur peut ainsi visualiser rapidement d'autres émissions enregistrées ou sortir du MVR. La visualisation à l'étape 7 est paramétrable, on verra par la suite les différentes options. A la fin de l'étape 7, le programme saute à l'étape 9 et attend une commande de l'utilisateur. Dans ce mode de réalisation, l'utilisateur contrôle manuellement la succession de la visualisation des différentes séquences; Lorsque l'utilisateur appuie sur la touche [►] de la télécommande 11, le module saute à l'étape 5 pour rechercher la séquence de ralenti suivante. Si l'utilisateur appuie sur la touche « FIN » (étape 10), il interrompt la visualisation rapide et retourne au menu initial.

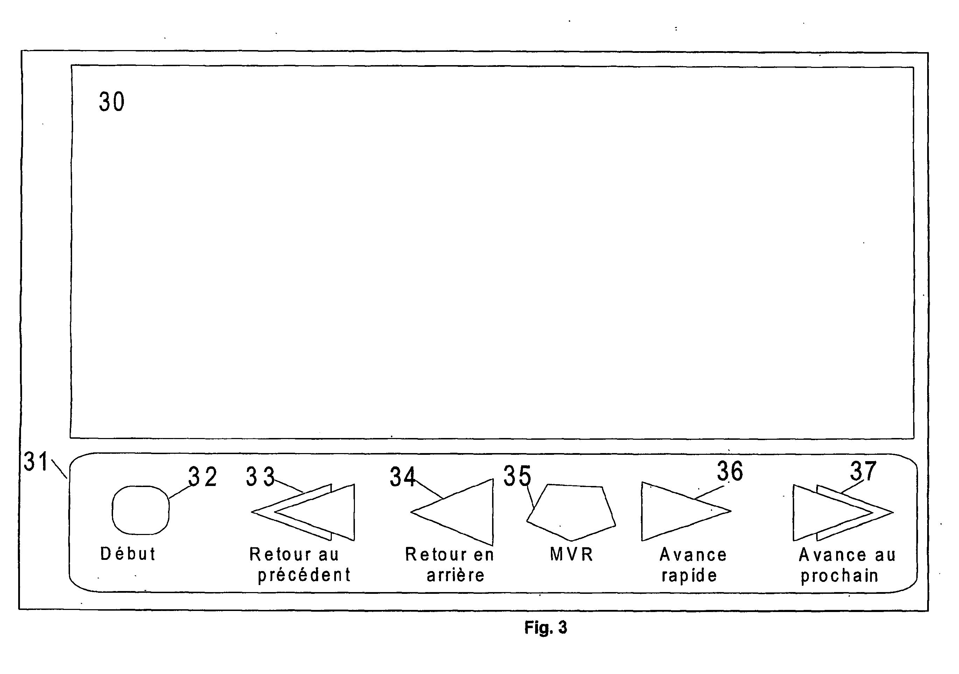

La figure 3 montre un exemple de menu apparaissant lorsque l'utilisateur visualise des émissions enregistrées dans la mémoire du récepteur. L'émission sélectionnée apparaît en haut de l'écran 30 et un bandeau de commande 31 en bas de l'écran. Ce bandeau contient les icônes de commande. En variante, le bandeau n'apparaît pas et les commandes sont réalisées par des touches de fonction sur la télécommande 11. Une liste non limitative de commandes est : aller au début de la visualisation des émissions enregistrées 32, visualisation de l'émission précédente enregistrée 33, visualisation en arrière de l'émission 34, lancement du MVR 35, visualisation rapide de l'émission enregistrée 36, visualisation de l'émission enregistrée suivante 37. La commande qui nous intéresse le plus pour la présente invention est celle permettant de lancer le Module de Visualisation Rapide (MVR).

Il va de soi que les commandes déjà décrites et celles qui le seront par la suite peuvent indifféremment être réalisées à l'aide de touches de fonctions spécifiques sur la télécommande 11 ou par des icônes affichées sur l'écran 22 et activables à l'aide de touches de direction et d'une touche « OK ». Par la suite, les commandes seront décrites par des icônes, mais il ne faut pas exclure l'utilisation de touches de fonctions sur la télécommande.

Une première amélioration du présent exemple de réalisation consiste en ce que les séquences de ralenti sont visualisées séquentiellement et de façon continue. Pour cela, une commande utilisateur intitulée « Visualisation continue/coup par coup » permet soit de visualiser la séquence suivante lorsque l'utilisateur actionne la commande « ►», soit de visualiser la succession des séquences sans interruption. Dans ce dernier cas, le programme après l'étape 7 saute directement à l'étape 10 et n'effectue pas le test de l'étape 9. La commande « Visualisation continue/coup par coup » est une commande à deux états, un nouvel actionnement bascule dans l'état initial.

Une autre amélioration consiste en ce que lors de la visualisation de la séquence de ralenti, l'activation de l'icône «►» interrompt la visualisation de la séquence en cours à l'étape 7, et fait passer le programme à l'étape 5 de recherche de la séquence de ralenti suivante. Cette séquence est visualisée directement.

Une autre amélioration consiste en ce que l'utilisateur peut revenir à tout moment au début de la séquence de ralenti en cours en activant l'icône « ◄ ». Cette amélioration s'effectue en mémorisant dans une mémoire temporaire la valeur du pointeur de début de séquence. Une double activation rapprochée de l'icône [◄] (appelée également « double clic») permet de revenir à la séquence de ralenti précédant celle en cours. Cette fonction est facilement réalisable en mettant dans une pile les adresses de début de chaque séquence de ralenti détectée: Une autre façon de faire qui sera détaillée par la suite, consiste à détecter les séquences lors de la réception, à ne mémoriser que les séquences et à créer un tableau d'index des séquences.

Selon le présent exemple de réalisation de l'invention, l'utilisateur peut visualiser les séquences de ralenti à la vitesse normale. Ceci s'effectue en connaissant le rapport de ralenti, la détermination de ce rapport s'effectue en même temps que la détection des séquences de ralenti. L'utilisateur demande la visualisation à vitesse normale des séquences de ralenti en activant l'icône intitulée «Vitesse normale/ralentie». Le module de gestion de l'écran multiplie la vitesse de visualisation de la séquence lue de la mémoire par le rapport de ralenti. De cette façon, la visualisation du résumé constitué de l'ensemble des séquences de ralenti est accéléré, et dure un temps minimum. Une seconde activation de l'icône fait revenir à la vitesse initiale de ralenti.

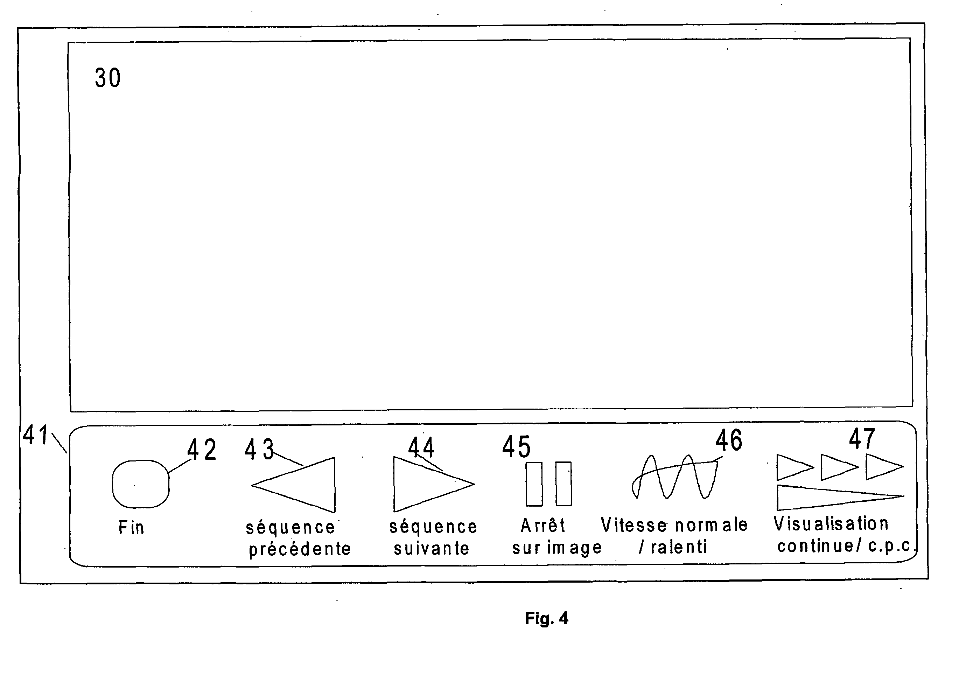

La figure 4 montre un exemple d'écran lors de la visualisation rapide d'une émission enregistrée. Les séquences de ralenti apparaissent en haut de l'écran 30 et un bandeau de commande 41 en bas de l'écran. Ce bandeau contient les icônes de commande suivantes, proposées à l'utilisateur :
- Fin de MVR, retour à la visualisation normale de l'émission (42).
- Retour au début ou à la séquence précédente (43).
- Saut à la séquence suivante (44).
- Arrêt sur image (45).
- Visualisation vitesse normale/ralenti (46).
- Visualisation continue/coup par coup (47).

La détection de ralenti peut se faire de différentes manières. Le diffuseur d'émission peut identifier les séquences de ralenti à l'aide d'un identifiant transmis dans les informations de service. Cet identifiant comprend le nom de l'événement, les références de temps de début et de fin de la séquence de ralenti et la valeur de rapport de ralenti. On rappelle que cette valeur est prise en compte lorsque l'utilisateur désire visualiser à vitesse normale une séquence de ralenti. Cette première façon de faire oblige le diffuseur de connaître à l'avance les séquences de ralenti.

Une variante consiste à analyser les images de l'émission enregistrées et à détecter si ces images appartiennent à une séquence de ralenti. Nous allons maintenant décrire un tel procédé de détection. Ce procédé a l'avantage d'éviter toute modification des données diffusées, et notamment l'emploi d'un identifiant de séquences de ralenti.

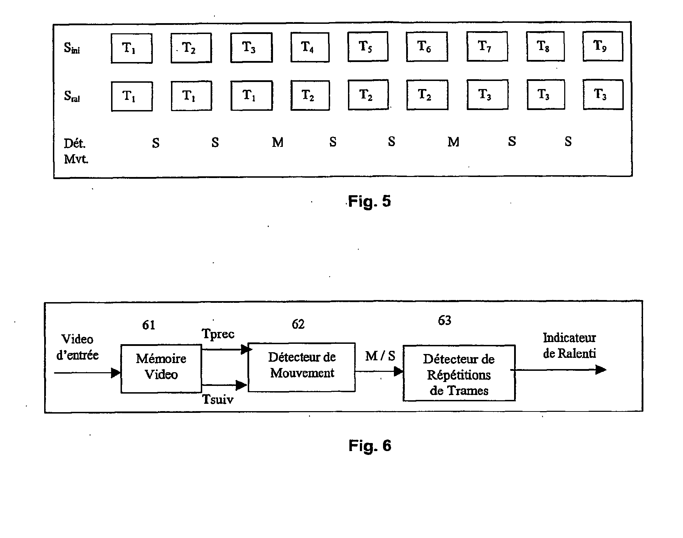

Afin de mieux comprendre comment fonctionne le détecteur, on va décrire comment une séquence de ralenti par répétition de trames est produite. La figure 5 montre une séquence initiale nommée « Sini ». A partir de cette séquence, on réalise un séquence de ralenti nommée « Sral ». En triplant le nombre de trames diffusées, cette diffusion prenant trois fois plus de temps, la séquence est visualisée trois plus lentement que la séquence de départ « Sini ». Le facteur de ralenti dans cet exemple est égal à 3.

Le présent exemple de réalisation utilise un détecteur de mouvement qui analyse deux trames consécutives extraites d'une émission audiovisuelle et qui détermine si elles diffèrent de manière significative ou non. Un détecteur de répétition de trames utilise les valeurs de sortie de ce détecteur pour déterminer si les images sont totalement statiques ou si elles sont en mouvement dans le temps. En effet, le détecteur de ralenti doit pouvoir distinguer des séquences contenant des images fixes tel que la présentation d'un tableau de peintre, des séquences à vitesse normale, et des séquences de ralenti où les images évoluent lentement afin de ne détecter que ces dernières. Seule les séquences correspondant à la troisième catégorie doivent être détectées.

La figure 6 montre le principe de fonctionnement général du dispositif de détection des séquences de ralenti faisant l'objet de invention.

Le dispositif reçoit en entrée les signaux vidéo diffusés et les stocke dans une mémoire vidéo 61 qui fait partie de la mémoire 12. Les données vidéo sont lues de la mémoire 61 et transmises à un détecteur de mouvement 62 par deux sorties correspondant aux signaux de deux trames Tprec et Tsuiv consécutives. Le détecteur de mouvement 62 opère en calculant par des seuils les différences inter-trames, c'est-à-dire l'accumulation, sur tout ou partie des trames, de la différence de luminance entre les pixels situés à la même position dans les deux trames. Il fournit, pour chaque couple de trames en entrée, un indicateur dit « de mouvement » de type booléen. La valeur de l'indicateur de mouvement est M (« M » : Mouvement) si le détecteur détecte un mouvement entre les deux trames analysées ou S (« S » : Statique) si les deux trames sont identiques parfaitement ou de façon significative. La succession des valeurs M et S de l'indicateur au cours du temps est analysée par le détecteur de répétitions de trames 63, qui positionne à sa sortie un booléen indiquant si la séquence vidéo d'entrée correspond ou non à un ralenti.

La détection des motifs de mouvement correspondant à des ralentis s'effectue en deux étapes:
- 1° étape : on cherche à détecter, dans la succession de valeurs M et S en sortie du détecteur de mouvement, un motif de répétition de trame.
- 2° étape : on corrèle, pendant plusieurs périodes de ralenti, la sortie du détecteur de mouvement avec le motif de répétition de trame détecté à la première étape, et on valide ou non la détection de ralenti en fonction du nombre d'identités observées entre le motif issu du détecteur de mouvement et le motif attendu.

Revenons à la figure 5, celle-ci montre un exemple de suite de valeurs d'indicateurs en sortie du détecteur de mouvement, qui correspond à un ralenti de facteur 3 généré par répétition de trames. En analysant la succession des valeurs, on constate qu'elle présente un motif caractéristique dit « motif de référence ». Dans l'exemple, celui apparaît périodiquement toutes les trois trames, il comporte une transition avec du mouvement (noté « M » sur la figure 5) suivie de deux transitions sans mouvement ou statiques (noté « S » sur la figure 5). Le motif de référence est en l'occurrence : [M-S-S]. Le motif de référence obtenu à l'aide des valeurs de sortie du détecteur de mouvement, consiste en un indicateur « M », immédiatement suivi d'une séquence d'indicateurs « S » consécutifs. Le nombre de symbole M et S du motif de référence est égal au rapport de ralenti noté N. Dans l'exemple, le motif de référence est M-S-S, ces trois valeurs traduisent le fait que la même trame se répète trois fois, le rapport de ralenti N est donc égal à 3 (=1 +2).

Le motif de référence représenté à la figure 5 est constitué d'une valeur « M » et de deux valeurs « S » (N=3). In est aisé de généraliser ce motif à des rapports de ralenti N entiers égaux à 2 ou plus, le motif de référence étant alors constitué d'un indicateur « M » suivi de (N-1) indicateurs « S ». Si on est en présence d'un ralenti, le motif de référence se reproduit à l'identique en sortie du détecteur de mouvement. La détermination du rapport de ralenti N est une donnée importante qui est liée à chaque séquence de ralenti et qui peut servir lors de la visualisation. Selon le présent exemple de réalisation, l'utilisateur peut visualiser les séquences de ralenti à vitesse normale en envoyant à l'écran qu'une image sur N, ce qui a pour effet d'accélérer dans le même rapport la séquence de ralenti.

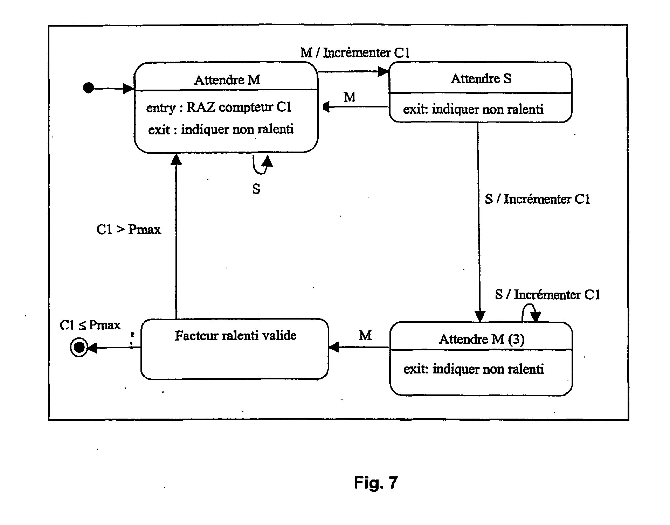

La figure 7 est un schéma d'un automate d'états finis permettant de traiter les motifs des valeurs d'indicateurs. Ce dessin est conforme au standard UML pour les machines d'état. Le principe de la détection de motif répétitif est le suivant : il s'agit de repérer, en sortie du détecteur de mouvement, les séquences constituées d'un indicateur « M » suivi d'au moins un « S ». Lors de la réception d'un « M », on initialise à 1 un compteur C1 qui va déterminer la période du motif détecté, qui correspond au rapport de ralenti si la détection est validée. Après réception du « M », on attend un « S ». Si l'indicateur reçu ne correspond pas à la valeur attendue, l'automate retourne dans son état initial. Dans le cas contraire, le compteur C1 est incrémenté. Après réception du premier « S » consécutif à un « M », on boucle sur la réception de « S » en incrémentant à chaque nouvel indicateur « S » le compteur C1. La réception d'un « M » représente la fin d'une période de répétition, et déclenche la fin de la première étape de détection du motif de répétition. Le motif détecté n'est toutefois validé que lorsque sa longueur, donnée par la valeur du compteur C1, est inférieure à une période maximale Pmax prédéterminée, correspondant au rapport de ralenti maximal admissible.

Pendant toute cette phase de détection, le motif de mouvement n'étant pas validé comme correspondant à un ralenti, il convient d'indiquer à chaque période trame que l'on n'a pas détecté de séquence de ralenti.

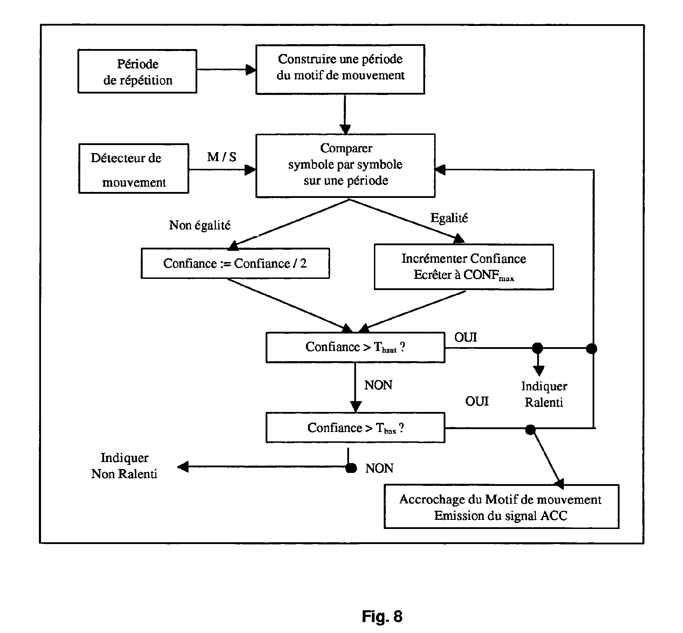

La figure 8 illustre le traitement appliqué pour valider la détection de séquence de ralenti sur les données issues du détecteur de mouvement, à partir du rapport de ralenti estimé dans la phase de détermination.

La validation, de la détection d'une séquence de ralenti consiste à comparer des blocs de N valeurs consécutives commençant par un «M» , avec un motif de référence déterminé lors de l'étape de détection, et à vérifier leur identité. Le motif de référence est construit en fonction de la période de répétition calculée lors de la première étape, et est constitué d'une valeur « M » suivie d'autant de valeurs « S » que nécessaire afin de compléter la période. Suivant qu'il y a identité ou non, sur une période de répétition du motif, entre la suite de valeur « M » et « S » à la sortie du détecteur de mouvement et le motif de référence, on vient modifier la valeur d'un compteur de confiance, initialisé à 0, de la manière suivante :
- S'il y a identité avec le motif de référence, on rajoute une unité au compteur. L'addition s'effectue jusqu'à une valeur prédéterminée CONFmax. Dans le présent exemple de réalisation, la valeur de CONFmax est égale à : 32.
- Si au moins un symbole diffère, on effectue une division entière par deux du compteur de confiance.

Si aucune identité n'est détectée, la valeur du compteur de confiance reste à « 0 ». Si il y a identité, le compteur croît lentement jusqu'à une valeur plafond. Le compteur de confiance peut être représenté par un octet. Par contre s'il n'y a plus identité, le compteur décroît rapidement.

Il faut noter que le motif de référence correspond en réalité à une phase particulière, parmi toutes les phases possibles dans une période de répétition, du motif de mouvement de référence. Il convient par conséquent de synchroniser le processus de validation avec la sortie du détecteur de mouvement de manière à ce que le groupe d'échantillons issu du détecteur de mouvement comporte en premier lieu un indicateur « M », puis les indicateurs « S ». Cette synchronisation s'effectue naturellement, dans la mesure où l'état de sortie du processus de détection correspond précisément à cette phase. Il suffit donc d'effectuer la lecture du premier groupe de valeurs d'indicateurs de mouvement en vue de la validation dans la foulée de la détection pour que la mise en phase soit correcte.

La valeur du compteur de confiance est ensuite comparée à chaque réception de motif à deux seuils de valeurs prédéterminées, un seuil haut Thaut (inférieur à CONFmax) et un seuil bas Tbas :
- Si la confiance est supérieure à Thaut, on considère que la détection de ralenti est validée et on positionne l'indicateur de sortie du système en conséquence ; on reste en phase de validation et on vient donc lire un nouveau groupe de symboles, correspondant à la période de répétition estimée composée de N valeurs d'indicateurs en sortie du détecteur de mouvement, que l'on compare au motif de référence ;
- Inversement, si la confiance est inférieure au seuil bas Tbas, on considère que l'on est en présence d'une détection de ralenti erronée, on ne valide pas la présence d'une séquence de ralenti.
- Si la confiance est comprise entre les deux seuils Thaut et Tbas, on indique que l'on n'est pas en présence d'un ralenti, mais on poursuit la validation en venant traiter un nouveau groupe de symboles en provenance du détecteur de mouvement.

La valeur plafond CONFmax du compteur de confiance étant 32, les valeurs Thaut et Tbas sont par exemple respectivement 16 et 8. Le signal délivré appelé « ACC » (pour « Accrochage ») lorsque la confiance est comprise entre les deux seuils Thaut et Tbas, indique qu'au moins deux motifs de ralenti ont été détectés mais ce n'est pas suffisant pour être sûr d'être en présence d'un ralenti. Lorsque la valeur du compteur de confiance atteint Thaut, on est certain qu'un grand nombre de coïncidences consécutives entre le motif observé et le motif de référence se sont produites, on peut alors valider la détection de ralenti.

Lorsque apparaît une séquence de ralenti, le compteur de confiance est incrémenté lors de chaque identité observée entre le motif issu du détecteur de mouvement et le motif de référence. Il faut donc 32 identités pour que le compteur atteigne son plafond. Supposons maintenant que la séquence de ralenti cesse. Lors de la première différence avec le motif de référence, la valeur du compteur devient égale à 16. Le signal de détection de ralenti est donc toujours activé. Lors de la seconde différence consécutive, le compteur a la valeur 8, le signal de détection de ralenti est désactivé, mais celui d'accrochage reste actif. Ce n'est qu'à la troisième différence (la valeur du compteur est égale à 4) que les deux signaux sont désactivées.

Un perfectionnement de la présente invention consiste à utiliser le signal ACC pour déclencher le stockage des trames de l'émission audiovisuelle reçue dans une mémoire temporaire (une partie du disque dur 25 par exemple). Si finalement, aucune séquence de ralenti n'est détectée, le compteur de confiance retombant en dessous de la valeur Tbas, alors ces données seront écrasées. Sinon, elles sont stockées en mémoire aux adresses précédant celles de la séquence de ralenti effectivement détectée. De cette façon, la quasi-totalité de la séquence de ralenti forme un bloc continu et peut être visualisée sans interruption.

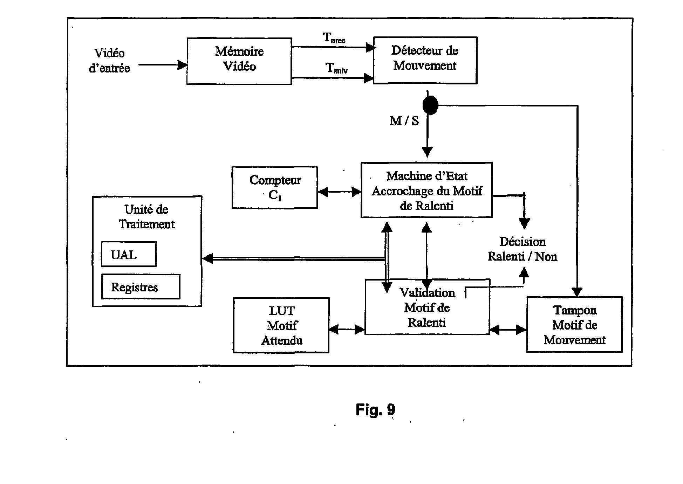

La figure 9 représente un schéma général du dispositif de détection de séquences de ralenti.

Le flux d'entrée comporte entre autres choses les informations de luminance et de chrominance des pixels constituant les trames du signal vidéo. Ces informations sont stockées dans une mémoire vidéo possédant un double accès lecture, de façon à pouvoir fournir simultanément au détecteur de mouvement les valeurs de luminance des pixels appartenant à une première trame Tprec et à une deuxième trame Tsuiv, et occupant les mêmes emplacements à l'intérieur de ces deux trames. Un exemple de réalisation d'un détecteur de mouvement consiste en un circuit électronique permettant d'accumuler les différences de luminance des pixels issus de Tprec et Tsuiv, et de comparer les seuils des résultats de cette accumulation afin de fournir à sa sortie un indicateur binaire « M / S », synchrone des trames vidéo d'entrée, signalant la présence (M) ou l'absence (S) de mouvement entre les deux trames traitées. Les valeurs comparées par le comparateur sont déclarées identiques si elles ne diffèrent pas d'un certain pourcentage. Ce pourcentage est de 10% dans le présent exemple de réalisation. De telle sorte que si le détecteur de mouvement indique si deux trames sont quasi-identiques, l'écart entre deux pixels étant de 10% maximum. Ce circuit électronique peut être réalisé par des composants électroniques discrets ou par un circuit intégré spécialisé (ASIC : "Application Specific Integrated Circuit" en langue anglaise) ou encore par un module logiciel utilisant les ressources de calcul et de mémoire d'une unité de traitement et intégré au MVR.

Les valeurs en sortie du détecteur de mouvement sont fournies au bloc de traitement exécutant l'automate d'état qui détecte la présence d'une séquence de ralenti. Ce bloc dispose d'un accès en lecture et en écriture au compteur C₁ dont la fonction est de calculer la période de répétition du motif de mouvement. Le calcul s'effectue en comptabilisant le nombre d'indicateurs M (donc une unité) et d'indicateurs S. Après détection d'une période d'un motif de ralenti, la valeur du compteur C₁ est mémorisée et le compteur C₁ est mis à zéro. Le motif de répétition ainsi détecté constitue le motif de référence ; il est stocké dans une mémoire. La valeur du compteur mémorisée constitue la période de répétition du motif de référence, et correspond au rapport de ralenti.

La sortie du détecteur de mouvement alimente en deuxième lieu une mémoire tampon permettant le stockage d'une suite de valeurs «M » et « S » constituant la sortie du détecteur de mouvement, de longueur égale à celle du motif de référence. Le contenu de cette mémoire tampon est ultérieurement comparé au motif de référence. La capacité de ce tampon doit être dimensionnée en fonction de la valeur maximale Pmax de la période de répétition du motif de mouvement, qui coïncide avec la valeur maximale du rapport de ralenti que l'on cherche à détecter.

En l'absence ou au début de l'apparition d'une séquence de ralenti, le dispositif de détection 63 fournit en sortie un signal binaire indiquant, à chaque période trame, que l'on n'a pas détecté de séquence de ralenti, puisque le motif de répétition de mouvement correspondant à un possible ralenti n'a pas encore été validé. Ce bloc contrôle également le déclenchement du processus de validation du motif de ralenti. Il fournit enfin au bloc de validation du motif la valeur de la période de répétition du motif, et le signal ACC.

La valeur de la période de répétition du motif permet la construction, par le bloc de validation, du motif de référence. Cette construction peut avantageusement être mise en oeuvre au moyen d'une « Look-Up-Table » selon la terminologie anglaise, adressée par la valeur de la période de répétition détectée, et comportant, pour chaque valeur de cette période considérée comme valide; la séquence des indicateurs « M/S» constituant le motif de référence.

Le bloc de validation du motif de ralenti compare la suite de valeurs « M » et « S » stockée dans le tampon alimenté par la sortie du détecteur de mouvement, et le motif de référence stocké dans la « Look-Up-Table ». Ce bloc valide le résultat de la comparaison au moyen du compteur de confiance introduit précédemment, pour fournir en sortie un signal binaire indiquant, à chaque période trame, si l'on est ou non en présence d'une séquence de ralenti.

Le bloc de validation du motif de ralenti comporte enfin une sortie vers le bloc de détection, afin de pouvoir réinitialiser et relancer le processus de détection dans le cas où la validation du motif de ralenti échouerait.

Les blocs de détermination et de validation du motif de ralenti, ainsi que le compteur C₁ et les mémoires tampon et LUT, peuvent avantageusement être implémentés par un module logiciel utilisant les ressources d'un processeur ou unité de traitement comportant, entre autres, une Unité Arithmétique et Logique et des registres permettant le stockage des variables intermédiaires du traitement. Les constantes de traitement telles que Tbas, Thaut et CONFmax peuvent être stockées dans une mémoire non volatile de type ROM (Read Only Memory selon la terminologie anglaise).

L'ensemble des éléments représenté dans le dispositif de la figure 9 est piloté par des signaux de synchronisation relatifs à l'échantillonnage des pixels vidéo, des lignes de pixels et des trames, disponibles à l'entrée du dispositif en même temps que le flux vidéo.

Si au cours de l'émission, les images initiales évoluent très peu sans toutefois constituer une séquence de ralenti, le détecteur de mouvement pourrait détecter leur identité. Pour éviter cela, selon un perfectionnement de l'invention, le détecteur de mouvement ne compare pas deux trames qui se suivent mais deux trames séparées par au moins une autre trame.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

En particulier, l'invention ne se limite pas aux décodeurs de télévision mais peut s'appliquer à tout dispositif de réception d'émissions audiovisuelles. Les émissions audiovisuelles peuvent notamment être reçues sous la forme d'une cassette vidéo, les moyens de réception devenant alors un moyen de lecture d'un support audiovisuel.

## Revendications

1. Procédé de visualisation de séquences de ralenti incluses dans des émissions audiovisuelles reçues d'un réseau de diffusion, comportant une étape préalable d'enregistrement d'au moins les séquences de ralenti de ladite émission dans une mémoire d'un récepteur, et une étape de lecture desdites séquences enregistrées ; **caractérisé en ce qu'**il comporte une étape de détermination par le récepteur d'un facteur de ralenti consistant à compter le nombre de fois qu'une même trame est répétée dans chaque séquence de ralenti, une étape de visualisation par le récepteur des séquences de ralenti de manière à les visualiser consécutivement, et de manière que la visualisation de chaque séquence enregistrée soit accélérée selon le facteur de ralenti déterminé pour être visualisée à la vitesse normale.

2. Procédé de visualisation selon la revendication 1, **caractérisé en ce qu'**il comporte une étape de détection d'une commande utilisateur déclenchant la visualisation de la séquence de ralenti suivante.

3. Procédé de visualisation selon la revendication 1, **caractérisé en ce qu'**il comporte une étape de détection d'une commande utilisateur déclenchant la visualisation de la séquence de ralenti précédente.

4. Procédé de visualisation selon la revendication 1, **caractérisé en ce qu'**il comporte une étape de détection des séquences de ralenti au sein d'émissions composées de trames comportant :
- a) une étape de détection de mouvement opérant sur deux trames consécutives extraites des émissions audiovisuelles, la dite étape générant une suite de valeurs de mouvement (M) ou d'absence de mouvement (S) d'indicateurs binaires indiquant respectivement la présence ou l'absence de mouvement entre les deux trames considérées,
- b) des étapes de détermination d'un motif de répétition de trame composé d'une valeur de mouvement (M) et d'une suite consécutive d'au moins une valeur d'absence de mouvement (S), le dit motif de répétition ayant une longueur,
- c) au moins une étape de constitution d'un motif de référence à partir d'un premier motif de répétition de trame,
- d) des étapes de détection de motifs composés d'une suite de valeurs de mouvement (M) et d'absence de mouvement (S) d'une longueur égale à celle du motif de référence,
- e) des étapes de comparaison entre le motif de référence et des motifs précédemment déterminés à l'étape d),
- f) une étape de comptabilisation dans un compteur dit de confiance du nombre d'identités entre le motif de référence et les motifs déterminés lors des étapes d),
- g) une étape de validation de la présence d'une séquence de ralenti lorsque la valeur du compteur de confiance est supérieure à une valeur déterminée (Thaut).

5. Procédé de visualisation selon la revendication 4, **caractérisé en ce que** ledit facteur de ralenti est égal au nombre d'indicateurs de mouvement (M) et d'absence de mouvement (S) constituant le motif de référence.

6. Procédé de visualisation selon l'une des revendications 4 ou 5, **caractérisé en ce qu'**il comporte une étape de validation d'un signal d'accrochage lorsque la valeur du compteur de confiance est supérieure à une valeur déterminée (Tbas).

7. Procédé de visualisation selon l'une quelconque des revendications 4 à 6, **caractérisé en ce que** l'étape de comptabilisation effectue une diminution de la valeur du compteur de confiance lorsque l'étape d) détecte une inégalité.

8. Procédé de visualisation selon l'une quelconque des revendications 4 à 7, **caractérisé en ce qu'**au cours de l'étape de comptabilisation, la valeur du compteur de confiance est plafonnée.

9. Récepteur d'émissions audiovisuelles comprenant un moyen de réception (2,3,4,5) d'émissions émises sur un réseau de diffusion, un moyen de mémorisation (25,26) d'au moins les séquences de ralenti extraites desdites émissions audiovisuelles reçues et des moyens de lecture (26) de la mémoire; **caractérisé en ce que** le récepteur comporte un moyen de calcul d'un facteur de ralenti consistant à compter le nombre de fois qu'une même trame est répétée dans chaque séquence de ralenti, un moyen d'accélération (12) des séquences de ralenti lues par les moyens de lecture (26) selon le facteur de ralenti ainsi calculé, et un moyen de visualisation (17,20) à la vitesse normale des séquences de ralenti accélérées selon le facteur de ralenti calculé.

10. Récepteur d'émissions audiovisuelles selon la revendication 9, **caractérisé en ce qu'**il comporte un module de visualisation qui contrôle les moyens de lecture (26) de la mémoire et qui, en réponse à une commande utilisateur lit la séquence de ralenti enregistrée après la séquence en cours et la visualise sans attendre la fin de la séquence en cours.

11. Récepteur d'émissions audiovisuelles selon l'une quelconque des revendications 9 ou 10, **caractérisé en ce qu'**il comporte un module de visualisation qui contrôle les moyens de lecture (26) de la mémoire et qui, en réponse à une commande utilisateur lit la séquence de ralenti enregistrée immédiatement avant la séquence en cours et la visualise sans attendre la fin de la séquence en cours.

12. Récepteur d'émissions audiovisuelles selon la revendication 9, comportant une mémoire de stockage d'au moins une partie d'émission audiovisuelle, un détecteur de mouvement détectant un mouvement (M) ou une absence de mouvement (S) entre deux images de même parité de la dite émission audiovisuelle lues de ladite mémoire, **caractérisé en ce qu'**il comporte en outre un moyen de détermination d'un motif de répétition de trames composé d'une valeur de mouvement (M) suivie d'une suite de valeurs d'absence de mouvement (S) comportant au moins une valeur d'absence de mouvement (S), une mémoire de stockage d'un motif dit de référence obtenu par le moyen de détermination d'un motif de répétition de trame, un comparateur comparant le motif de référence avec les motifs enregistrés en sortie du détecteur de mouvement opérant sur les trames issues de l'émission audiovisuelle traitée, un compteur dit de confiance comptabilisant le nombre d'identités déterminé par le comparateur, un moyen d'émission d'un signal de présence d'un ralenti lorsque la valeur du compteur de confiance atteint une valeur déterminée (Thaut).

13. Récepteur d'émissions audiovisuelles selon la revendication 12, **caractérisé en ce que** le facteur de ralenti calculé est égal au nombre d'indicateurs de mouvement (M) et d'absence de mouvement (S) constituant le motif de référence.

14. Récepteur d'émissions audiovisuelles selon la revendication 12 ou 13, **caractérisé en ce qu'**il comporte en outre un moyen d'émission d'un signal dit d'accrochage lorsque la valeur du compteur de confiance atteint une valeur déterminée (Tbas), le signal d'accrochage déclenchant la mémorisation de l'émission audiovisuelle dans l'appareil.

15. Récepteur d'émissions audiovisuelles selon l'une quelconque des revendications 12 à 14, **caractérisé en ce qu'**il comporte un diviseur de la valeur du compteur de confiance, le dit diviseur étant activé lorsque le comparateur détecte une différence entre le motif de référence et le motif de répétition de trame détecté par le moyen de détermination.

16. Récepteur d'émissions audiovisuelles selon l'une quelconque des revendications 12 à 15, **caractérisé en ce que** le détecteur de mouvement détecte un mouvement entre deux trames de même parité séparées par au moins une trame de même parité que les deux premières.

## Claims

1. A method of displaying slow motion sequences included in audiovisual transmissions received from a broadcasting network, comprising a prior step of recording at least the slow motion sequences of said transmission in a memory of a receiver, and a step of reading said recorded sequences; **characterized in that** it comprises a step of determination by the receiver of a slow motion factor consisting in counting the number of times a same frame is repeated in each slow motion sequence, a step of displaying the slow motion sequences by the receiver so as to be displayed consecutively, the displaying of each recorded sequence being accelerated according to the determined slow motion factor in order to be displayed at normal speed.

2. The method of display as claimed in claim 1, **characterized in that** it comprises a step of detecting a user command triggering the display of the next slow motion sequence.

3. The method of display as claimed in claim 1, **characterized in that** it comprises a step of detecting a user command triggering the display of the previous slow motion sequence.

4. The method of display as claimed in claim 1, **characterized in that** it comprises a step of detecting slow motion sequences within transmissions composed of frames comprising:
- a) a step of motion detection operating on two consecutive frames extracted from the audiovisual transmissions, said step generating a string of values of motion (M) or of absence of motion (S) of binary indicators respectively indicating the presence or the absence of motion between the two relevant frames,
- b) steps of determining a frame repetition pattern composed of a motion value (M) and of a consecutive string of at least one absence of motion value (S), said repetition pattern having a length,
- c) at least one step of constructing a reference pattern from a first frame repetition pattern,
- d) steps of detecting patterns composed of a string of values of motion (M) and of absence of motion (S) of a length equal to that of the reference pattern,
- e) steps of comparing between the reference pattern and patterns previously determined in step d),
- f) a step of reckoning up in a so-called confidence counter the number of identities between the reference pattern and the patterns determined during steps d),
- g) a step of validating the presence of a slow motion sequence when the value of the confidence counter is greater than a determined value (Thigh).

5. The method of display as claimed in claim 4, **characterized in that** said slow motion factor is equal to the number of indicators of motion (M) and of absence of motion (S) constituting the reference pattern.

6. The method of display as claimed in one of claims 4 or 5, **characterized in that** it comprises a step of validating a lock-on signal when the value of the confidence counter is greater than a determined value (Tlow).

7. The method of display as claimed in any one of claims 4 to 6, **characterized in that** the reckoning step effects a reduction in the value of the confidence counter when step d) detects an inequality.

8. The method of display as claimed in any one of claims 4 to 7, **characterized in that** in the course of the reckoning step, a ceiling is placed on the value of the confidence counter.

9. A receiver of audiovisual transmissions comprising a means (2, 3, 4, 5) of receiving transmissions transmitted on a broadcasting network, a means (25, 26) of storing at least the slow motion sequences extracted of said received audiovisual transmissions and means for reading (26) the memory; **characterized in that** the receiver comprises a means for calculating a slow motion factor consisting in counting the number of times a same frame is repeated in each slow motion sequence, a means (12) for accelerating the slow motion sequences read by the means for reading (26) according to the slow motion factor thus calculated, and a means (17, 20) of displaying at normal speed the slow motion sequences accelerated according to the calculated slow motion factor.

10. The receiver of audiovisual transmissions as claimed in claim 9, **characterized in that** it comprises a display module which controls the means (26) for reading the memory and which, in response to a user command, reads the slow motion sequence recorded after the sequence in progress and displays it without waiting for the end of the sequence in progress.

11. The receiver of audiovisual transmissions as claimed in any one of claims 9 or 10, **characterized in that** it comprises a display module which controls the means (26) for reading the memory and which, in response to a user command, reads the slow motion sequence recorded immediately before the sequence in progress and displays it without waiting for the end of the sequence in progress.

12. The receiver of audiovisual transmissions as claimed in claim 9, comprising a memory for storing at least a part of an audiovisual transmission, a motion detector detecting a motion (M) or an absence of motion (S) between two images of like parity of said audiovisual transmission which are read from said memory, **characterized in that** it furthermore comprises a means for determining a frame repetition pattern composed of a value of motion (M) followed by a string of values of absence of motion (S) comprising at least one value of absence of motion (S), a memory for storing a so-called reference pattern obtained by the means for determining a frame repetition pattern, a comparator comparing the reference pattern with the patterns recorded at the output of the motion detector operating on the frames emanating from the processed audiovisual transmission, a so-called confidence counter reckoning up the number of identities which is determined by the comparator, a means for transmitting a signal of presence of slow motion when the value of the confidence counter reaches a determined value (Thigh).

13. The receiver of audiovisual transmissions as claimed in claim 12, **characterized in that** the calculated slow motion factor is equal to the number of indicators of motion (M) and of absence of motion (S) constituting the reference pattern.

14. The receiver of audiovisual transmissions as claimed in claim 12 or 13, **characterized in that** it furthermore comprises a means of transmitting a so-called lock-on signal when the value of the confidence counter reaches a determined value (Tlow), the lock-on signal triggering the storage of the audiovisual transmission in the appliance.

15. The receiver of audiovisual transmissions as claimed in any one of claims 12 to 14, **characterized in that** it comprises a divider of the value of the confidence counter, said divider being activated when the comparator detects a difference between the reference pattern and the frame repetition pattern detected by the determining means.

16. The receiver of audiovisual transmissions as claimed in any one of claims 12 to 15, **characterized in that** the motion detector detects a motion between two frames of like parity which are separated by at least one frame of the same parity as the first two.

## Patentansprüche

1. Verfahren zum Anzeigen von Zeitlupensequenzen, die in aus einem Verbreitungsnetz empfangenen audiovisuellen Sendungen enthalten sind, mit einem vorhergehenden Schritt des Aufnehmens mindestens der Zeitlupensequenzen der Sendung in einen Speicher eines Empfängers und einem Schritt des Lesens der aufgenommenen Sequenzen, **dadurch gekennzeichnet, dass** es einen Schritt des Bestimmens eines Zeitlupenfaktors durch den Empfänger aufweist, der darin besteht zu zählen, wie viele Male ein selber Frame in jeder Zeitlupensequenz wiederholt wird, und einen Schritt des Anzeigens der Zeitlupensequenzen durch den Empfänger, derart, dass sie aufeinander folgend angezeigt werden und dass das Anzeigen jeder aufgenommenen Sequenz entsprechend dem bestimmten Zeitlupenfaktor beschleunigt wird, damit die Anzeige mit normaler Geschwindigkeit erfolgt.

2. Anzeigeverfahren nach Anspruch 1, **dadurch gekennzeichnet, dass** es einen Schritt des Erfassens eines das Anzeigen der folgenden Zeitlupensequenz auslösenden Benutzerbefehls aufweist.

3. Anzeigeverfahren nach Anspruch 1, **dadurch gekennzeichnet, dass** es einen Schritt des Erfassens eines das Anzeigen der vorhergehenden Zeitlupensequenz auslösenden Benutzerbefehls aufweist.

4. Anzeigeverfahren nach Anspruch 1, **dadurch gekennzeichnet, dass** es einen Schritt des Erfassens der Zeitlupensequenzen innerhalb von aus Frames bestehenden Sendungen aufweist, umfassend:
- a) einen Schritt des Erfassens einer Bewegung über zwei aufeinander folgende Frames aus den audiovisuellen Sendungen, wobei dieser Schritt eine Folge von Bewegungswerten (M) oder Nichtbewegungswerten (S) binärer Indikatoren erzeugt, die das Vorhandensein bzw. das Nichtvorhandensein einer Bewegung zwischen den zwei betreffenden Frames anzeigt,
- b) Schritte des Bestimmens eines Framewiederholungsmusters, welches aus einem Bewegungswert (M) und aus einer darauf folgenden Folge aus mindestens einem Nichtbewegungswert (S) besteht, wobei das Wiederholungsmuster eine Länge aufweist,
- c) mindestens einen Schritt des Bildens eines Referenzmusters ausgehend von einem ersten Framewiederholungsmuster,
- d) Schritte des Erfassens von Mustern, die aus einer Folge von Bewegungswerten (M) und Nichtbewegungswerten (S) mit einer Länge, die derjenigen des Referenzmusters gleich ist, bestehen,
- e) Schritte des Vergleichens zwischen dem Referenzmuster und den zuvor in Schritt d) bestimmten Mustern,
- f) einen Schritt des Zählens der Anzahl von Übereinstimmungen zwischen dem Referenzmuster und den in den Schritten d) bestimmten Mustern in einem so genannten Vertrauenszähler,
- g) einen Schritt des Validierens des Vorhandenseins einer Zeitlupensequenz, wenn der Wert des Vertrauenszählers höher ist als ein bestimmter Wert (T_{oben}).

5. Anzeigeverfahren nach Anspruch 4, **dadurch gekennzeichnet, dass** der Zeitlupenfaktor gleich der Anzahl von Bewegungsindikatoren (M) und Nichtbewegungsindikatoren (S) ist, die das Referenzmuster bilden.

6. Anzeigeverfahren nach einem der Ansprüche 4 oder 5, **dadurch gekennzeichnet, dass** es einen Schritt der Validierung eines Rückkopplungssignals aufweist, wenn der Wert des Vertrauenszählers höher ist als ein bestimmter Wert (Tᵤₙₜₑₙ)

7. Anzeigeverfahren nach einem der vorhergehenden Ansprüche 4 bis 6, **dadurch gekennzeichnet, dass** der Schritt des Zählens eine Verringerung des Werts des Vertrauenszählers durchführt, wenn in Schritt d) eine Ungleichheit erfasst wird.

8. Anzeigeverfahren nach einem der vorhergehenden Ansprüche 4 bis 7, **dadurch gekennzeichnet, dass** der Wert des Vertrauenszählers während des Schritts des Zählens gedeckelt ist.

9. Empfänger von audiovisuellen Sendungen mit einem Mittel für den Empfang (2, 3, 4, 5) von über ein Verbreitungsnetz ausgesendeten Sendungen, einem Mittel zum Speichern (25, 26) mindestens der Zeitlupensequenzen aus den empfangenen audiovisuellen Sendungen und Mitteln zum Lesen (26) des Speichers, **dadurch gekennzeichnet, dass** der Empfänger ein Mittel zum Berechnen eines Zeitlupenfaktors aufweist, welches darin besteht zu zählen, wie viele Male ein selber Frame in jeder Zeitlupensequenz wiederholt wird, ein Mittel (12), um die von den Lesemitteln (26) gelesenen Zeitlupensequenzen entsprechend dem so berechneten Zeitlupenfaktor zu beschleunigen und ein Mittel (17, 20), um die entsprechend dem berechneten Zeitlupenfaktor beschleunigten Zeitlupensequenzen mit normaler Geschwindigkeit anzuzeigen.

10. Empfänger von audiovisuellen Sendungen nach Anspruch 9, **dadurch gekennzeichnet, dass** er ein Anzeigemodul aufweist, das die Mittel zum Lesen (26) des Speichers kontrolliert und das auf einen Benutzerbefehl hin die nach der laufenden Sequenz aufgenommene Zeitlupensequenz liest und sie anzeigt, ohne das Ende der laufenden Sequenz abzuwarten.

11. Empfänger von audiovisuellen Sendungen nach einem der Ansprüche 9 oder 10, **dadurch gekennzeichnet, dass** er ein Anzeigemodul aufweist, das die Mittel zum Lesen (26) des Speichers kontrolliert und das auf einen Benutzerbefehl hin die unmittelbar vor der laufenden Sequenz aufgenommene Zeitlupensequenz liest und sie anzeigt, ohne das Ende der laufenden Sequenz abzuwarten.

12. Empfänger von audiovisuellen Sendungen nach Anspruch 9, mit einem Speicher zum Speichern mindestens eines Teils einer audiovisuellen Sendung, einem Bewegungsdetektor, der eine Bewegung (M) oder eine Nichtbewegung (S) zwischen zwei aus dem Speicher gelesenen Bildern gleicher Parität der audiovisuellen Sendung erfasst, **dadurch gekennzeichnet, dass** er ferner ein Mittel zum Bestimmen eines Framewiederholungsmusters aufweist, das aus einem Bewegungswert (M) gefolgt von einer Folge von Nichtbewegungswerten (S) besteht, mit mindestens einem Nichtbewegungswert (S), einem Speicher zum Speichern eines sogenannten Referenzmusters, das durch das Mittel zum Bestimmen eines Framewiederholungsmusters erzielt wird, einem Komparator, der das Referenzmuster mit den Mustern vergleicht, die am Ausgang des Bewegungsdetektors aufgenommen werden, der mit den Frames aus der behandelten audiovisuellen Sendung arbeitet, einem sogenannten Vertrauenszähler, der die von dem Komparator bestimmte Anzahl von Übereinstimmungen zählt, und einem Mittel zum Senden eines Signals über das Vorhandensein einer Zeitlupe, wenn der Wert des Vertrauenszählers einen bestimmten Wert (T_{oben}) erreicht.

13. Empfänger von audiovisuellen Sendungen nach Anspruch 12, **dadurch gekennzeichnet, dass** der berechnete Zeitlupenfaktor gleich der Anzahl von Bewegungsindikatoren (M) und Nichtbewegungsindikatoren (S) ist, welche das Referenzmuster bilden.

14. Empfänger von audiovisuellen Sendungen nach Anspruch 12 oder 13, **dadurch gekennzeichnet, dass** er ferner ein Mittel aufweist, um ein sogenanntes Rückkopplungssignal zu senden, wenn der Wert des Vertrauenszählers einen bestimmten Wert (Tᵤₙₜₑₙ) erreicht, wobei das Rückkopplungssignal das Speichern der audiovisuellen Sendung in dem Gerät auslöst.

15. Empfänger von audiovisuellen Sendungen nach einem der Ansprüche 12 bis 14, **dadurch gekennzeichnet, dass** er einen Teiler des Werts des Vertrauenszählers aufweist, wobei der Teiler aktiviert wird, wenn der Komparator einen Unterschied zwischen dem Referenzmuster und dem von dem Bestimmungsmittel erfassten Framewiederholungsmuster erfasst.

16. Empfänger von audiovisuellen Sendungen nach einem der Ansprüche 12 bis 15, **dadurch gekennzeichnet, dass** der Bewegungsdetektor eine Bewegung zwischen zwei Frames von gleicher Parität erfasst, die durch mindestens einen Frame von gleicher Parität wie die beiden ersten getrennt sind.
